# FASCICULE DE BREVET EUROPEEN

(11) **EP 0 640 058 B1**
(45) Date de publication et mention de la délivrance du brevet: **15.01.1997**
(21) Numéro de dépôt: 94909972.5
(22) Date de dépôt: 16.03.1994
(51) Int. Cl.: C01B 17/04, B01D 53/52

(54) **PROCEDE D'ELIMINATION D'HYDROGENE SULFURE D'UN GAZ AVEC RECUPERATION SOUS LA FORME DE SOUFRE**
VERFAHREN ZUR ENTFERNUNG VON SCHWEFELWASSERSTOFF AUS EINEM GAS, MIT RÜCKGEWINNUNG VON SCHWEFEL
METHOD FOR REMOVING HYDROGEN SULPHIDE FROM A GAS AND RECOVERING IN THE FORM OF SULPHUR

(30) Priorité: 16.03.1993 FR 9302994
(43) Date de publication de la demande: 01.03.1995
(73) Titulaire: ELF AQUITAINE PRODUCTION, 92400 Courbevoie (FR)
(72) Inventeur: PHILIPPE, André, F-64300 Orthez (FR); NOUGAYREDE, Jean, F-64000 Pau (FR); KVASNIKOFF, Georges, F-64360 Monein (FR)
(74) Mandataire: Boillot, Marc
(86) Numéro de dépôt international: FR9400285
(87) Numéro de publication internationale: WO9421555

(56) Documents cités:
- EP-A- 0 078 690
- EP-A- 0 324 091
- WO-A-91/12201
- WO-A-92/02449

## Description

L'invention a trait à un procédé pour l'élimination de l'H₂S contenu dans un gaz en concentration inférieure à 5 % en volume avec récupération de cet H₂S sous la forme de soufre.

La citation FR-A-2589140 décrit un procédé pour l'élimination de l'H₂S contenu dans un gaz en concentration inférieure notamment à 5 % en volume, dans lequel on fait passer le gaz renfermant H₂S avec une quantité contrôlée d'un gaz renfermant de l'oxygène libre, à une température appropriée, au contact d'un catalyseur d'oxydation de l'H₂S en soufre pour former un courant gazeux contenant H₂S et SO₂ dans un rapport molaire H₂S:SO₂ sensiblement égal à 2:1 ainsi que du soufre élémentaire en phase vapeur, puis on amène ledit courant gazeux, après refroidissement en-dessous de 160°C et éventuellement séparation du soufre qu'il contient, au contact d'un catalyseur CLAUS opérant à une température suffisamment basse pour que le soufre, se formant par réaction d'H₂S sur SO₂, soit retenu sur le catalyseur avec production d'un effluent gazeux résiduaire à teneur très réduite en composés soufrés que l'on soumet à une incinération avant rejet à l'atmosphère, et l'on balaie périodiquement le catalyseur CLAUS chargé de soufre à l'aide d'un gaz non oxydant ayant une température comprise entre 200°C et 500°C pour vaporiser le soufre retenu par ce catalyseur et assurer ainsi la régénération de ce dernier, puis on refroidit le catalyseur régénéré jusqu'à la température requise pour une nouvelle mise en contact avec le gaz renfermant H₂S et SO₂, c'est-à-dire avec le courant gazeux issu de l'oxydation.

Dans un tel procédé, aussi efficace que puisse être le contrôle de la quantité du gaz renfermant de l'oxygène libre, que l'on utilise dans l'étape d'oxydation catalytique de l'H₂S en stoechiométrie CLAUS, la possibilité subsiste que de l'oxygène non converti soit entraîné dans le courant gazeux renfermant H₂S et SO₂ issu de l'oxydation catalytique, que l'on amène au contact du catalyseur, avec comme conséquence un risque de désactivation dudit catalyseur CLAUS. De plus, l'étape ultime du processus étant la réaction de CLAUS, la qualité de l'épuration réalisée est donc tributaire de la qualité de la régulation du débit de gaz renfermant de l'oxygène libre injecté sur le réacteur d'oxydation.

La citation EP-A-0324091 concerne un procédé pour l'élimination de l'H₂S contenu dans un gaz, lequel procédé comprend une phase de réaction consistant à faire passer le gaz à traiter en présence d'oxygène au contact d'une masse d'absorption catalytique pour l'oxydation sélective de l'H₂S en soufre, qui est maintenue pendant la réaction à une température inférieure au point de fusion du soufre, pour former du soufre, qui se dépose sur la masse catalytique, et une phase de régénération de la masse catalytique chargée de soufre par chauffage à des températures de 240°C à 350°C, en l'absence d'oxygène, pour vaporiser le soufre qu'elle retient. La masse d'absorption catalytique est constituée d'un support poreux inerte associé à une phase active choisie parmi les sulfures et/ou oxydes métalliques promoteurs de l'oxydation sélective de l'H₂S en soufre. Cette phase active dérive de préférence du fer, mais elle peut également dériver d'autres métaux choisis parmi chrome, cobalt, molybdène, cuivre, manganèse et vanadium et peut consister en particulier en sulfures mixtes de fer et d'un ou plusieurs desdits autres métaux.La température de la masse catalytique, pendant la phase de réaction, est inférieure à 120°C, plus particulièrement inférieure à 90°C et tout particulièrement inférieure à 70°C. Les exemples décrivent tous une mise en oeuvre de la phase de réaction à température ambiante.De plus, il est nécessaire que le gaz à traiter renferme de l'eau en concentration au moins égale à 0,5% en volume.En outre, une mise oeuvre préférée de la régénération de la masse catalytique chargée de soufre consiste tout d'abord à balayer ladite masse au moyen d'un gaz inerte à des températures inférieures au point de fusion du soufre pour éliminer l'eau qu'elle renferme, après quoi on procède à la vaporisation du soufre par chauffage aux températures de 240°C à 350°C. Enfin, la masse catalytique régénérée est réhydratée à des températures inférieures à 80°C et en particulier à 50°C dans un courant de gaz ayant une teneur en eau allant de 0,5% à 20% en volume.

L'invention a pour objet un procédé d'élimination de l'H₂S contenu dans un gaz en concentration inférieure à 5 % en volume avec récupération de cet H₂S sous la forme de soufre, lequel procédé ne comporte pas l'étape de réaction CLAUS entre H₂S et SO₂ du procédé de la citation FR-A-2589140 et permet d'éliminer les inconvénients mentionnés plus haut.

Le procédé selon l'invention est un procédé dans lequel on fait passer le gaz à traiter renfermant H₂S avec un gaz renfermant de l'oxygène libre, en quantité propre à fournir un rapport molaire O₂:H₂S allant de 0,5 à 3 et de préférence de 0,5 à 1,5, au contact d'un catalyseur d'oxydation sélective de l'H₂S en soufre consistant en une phase active, constituée d'un ou plusieurs oxydes et/ou sels de métaux de transition, déposée sur support en un matériau réfractaire et l'on réalise la mise en contact du gaz à traiter et du gaz renfermant de l'oxygène libre avec ledit catalyseur en opérant à des températures, qui sont maintenues, pendant toute la durée de ladite mise en contact, à des valeurs choisies entre 60°C et 180°C, plus spécialement dans l'intervalle 80°C à 140°C et de préférence dans l'intervalle 90°C à 120°C, pour oxyder substantiellement quantitativement en soufre l'H₂S présent dans ledit gaz à traiter et déposer le soufre formé sur le catalyseur et obtenir un courant gazeux pratiquement exempt d'H₂S, ledit procédé se caractérisant en ce que la phase active du catalyseur d'oxydation dérive d'au moins l'un des métaux nickel, argent et tungstène.

En mettant en oeuvre la réaction d'oxydation catalytique de l'H₂S en soufre dans l'intervalle de température selon l'invention, l'H₂S est oxydé sélectivement en soufre sans formation de SO₂, même en présence d'un excès d'oxygène.

En d'autres termes, dans le procédé selon l'invention, on peut travailler avec un large excès d'oxygène par rapport à la stoechiométrie de la réaction H₂S + ¹/₂ O₂ ----> H₂O + S,tout en conservant une conversion quasi quantitative de l'H₂S et une excellente sélectivité en soufre, ce qui permet d'obtenir un rendement en soufre pratiquement indépendant de la qualité de la régulation du débit d'oxygène sur le catalyseur d'oxydation.

L'addition de la quantité requise du gaz renfermant de l'oxygène libre au gaz à traiter renfermant H₂S peut être effectuée soit au cours de la mise en contact dudit gaz avec le catalyseur d'oxydation de l'H₂S en soufre ou, de préférence, avant ladite mise en contact afin d'obtenir un milieu réactionnel très homogène lors du contact avec ledit catalyseur.

Le gaz renfermant de l'oxygène libre utilisé pour l'oxydation, en soufre, de l'H₂S contenu dans le gaz à traiter est généralement de l'air, bien qu'il soit possible d'employer de l'oxygène pur, de l'air enrichi en oxygène, ou encore des mélanges, en proportions variées, d'oxygène et d'un gaz inerte autre que l'azote.

Comme indiqué précédemment, le gaz renfermant de l'oxygène libre est utilisé en quantité propre à fournir un rapport molaire O₂:H₂S allant de 0,5 à 3 et plus particulièrement de 0,5 à 1,5 dans le milieu réactionnel arrivant au contact du catalyseur d'oxydation de l'H₂S en soufre.

Les temps de contact du milieu réactionnel gazeux avec le catalyseur d'oxydation peuvent aller de 0,5 seconde à 20 secondes et de préférence de 1 seconde à 15 secondes, ces valeurs étant données dans les conditions normales de pression et de température.

En particulier, le catalyseur d'oxydation peut être constitué d'une phase active, consistant en un ou plusieurs oxydes et/ou sels d'un ou plusieurs métaux de transition choisis parmi nickel, argent et tungstène, déposée sur un support en un matériau réfractaire tel que, par exemple, bauxite, alumine activée et/ou stabilisée, oxyde de titane, oxyde de zirconium, zéolithes, mélanges silice/alumine, mélanges silice/oxyde de titane, silice, ou bien sur un support en charbon actif. Le catalyseur d'oxydation présente un volume poreux permettant une charge en soufre importante. Avantageusement, le volume poreux du catalyseur, déterminé par la méthode de pénétration au mercure, représente 150 cm³ à 600 cm³ par litre de catalyseur.

La phase active, comptée en poids de métal, représente le plus souvent 0,1 à 15 % et de préférence 0,2 à 7 % du poids du catalyseur d'oxydation.

Pour conserver la sélectivité du catalyseur d'oxydation pour l'oxydation de l'H₂S en soufre, il est nécessaire de maintenir ledit catalyseur à une température inférieure à 180°C tout au long de l'étape d'oxydation de l'H₂S. Si la concentration en H₂S ou/et la température du gaz à traiter renfermant H₂S amené au contact du catalyseur d'oxydation, sont telles que, du fait de la forte exothermicité de la réaction H₂S + ¹/₂ O₂ → S + H₂O, la température du milieu réactionnel, à l'issue de l'oxydation, est susceptible de dépasser 180°C, on évacue les calories dégagées par ladite réaction en soumettant le catalyseur à un refroidissement, par toute méthode connue. On peut, par exemple, réaliser ce refroidissement à l'aide d'un fluide froid circulant en échange indirect de chaleur avec ledit catalyseur au sein de ce dernier. On peut encore opérer en plaçant le catalyseur dans un réacteur tubulaire constitué de tubes disposés dans une calandre avec, par exemple, le catalyseur présent dans les tubes et un fluide froid circulant entre les tubes côté calandre. On peut également effectuer l'oxydation catalytique dans un réacteur à plusieurs étages de catalyseur avec refroidissement du milieu réactionnel entre les étages successifs par échange indirect de chaleur avec un fluide froid, l'échange de chaleur ayant lieu à l'intérieur ou à l'extérieur du réacteur d'oxydation.

Avantageusement, l'oxydation de l'H₂S en soufre, au contact du catalyseur d'oxydation, est mise en oeuvre à des températures allant de 80°C à 140°C et plus spécialement de 90°C à 120°C.

Le gaz issu de la mise en contact du gaz à traiter renfermant H₂S et du gaz renfermant de l'oxygène libre avec le catalyseur d'oxydation, peut être soumis si besoin est, à une incinération thermique ou catalytique, pour transformer en SO₂ les traces d'H₂S qu'il peut encore contenir, avant d'être rejeté à l'atmosphère.

Au cours de l'oxydation de l'H₂S en soufre, le catalyseur d'oxydation se charge progressivement en soufre. Périodiquement, on procède à la régénération du catalyseur chargé de soufre par balayage dudit catalyseur à l'aide d'un gaz non oxydant en opérant à des températures comprises entre 200°C et 500°C et de préférence entre 250°C et 450°C pour vaporiser le soufre retenu sur le catalyseur, puis on refroidit le catalyseur régénéré jusqu'à une température inférieure à 180°C pour une nouvelle mise en oeuvre de la réaction d'oxydation, ce refroidissement étant réalisé au moyen d'un gaz inerte ayant une température appropriée inférieure à 180°C. Le gaz de refroidissement peut être éventuellement chargé de vapeur d'eau au moins pendant la phase finale du refroidissement du catalyseur.

Le gaz de balayage, utilisé pour la régénération du catalyseur d'oxydation chargé de soufre, peut être tel que méthane, azote, CO₂ ou mélanges de tels gaz ou encore consister en une fraction du courant gazeux issu de l'étape d'oxydation et dirigé vers l'incinération ou en une fraction du gaz à traiter. Le gaz de balayage utilisé pour la régénération précitée peut éventuellement contenir une certaine proportion d'un composé réducteur gazeux tel que, par exemple, H₂, CO ou H₂S, au moins au cours de la phase finale de la régénération, c'est-à-dire après la vaporisation de la plus grande partie du soufre déposé sur le catalyseur d'oxydation, ceci pour réduire des sulfates qui auraient pu se former avec certains catalyseurs pendant la phase d'épuration. Un tel gaz de balayage peut consister notamment en une fraction du gaz à traiter renfermant de l'H₂S.

La mise en oeuvre de la réaction d'oxydation catalytique selon l'invention peut être réalisée dans une zone unique d'oxydation catalytique, qui opère alternativement en phase d'oxydation et en phase de régénération/refroidissement. Une telle mise en oeuvre est retenue lorsque le gaz à traiter renferme peu d'H₂S et que, de ce fait, la régénération du catalyseur est peu fréquente. Avantageusement, la mise en oeuvre de la réaction catalytique, selon l'invention, est réalisée dans une pluralité de zones d'oxydation catalytique, qui opèrent de telle sorte que l'une au moins desdites zones opère en phase de régénération/refroidissement, tandis que les autres zones sont en phase d'oxydation catalytique. On peut encore opérer en ayant une ou plusieurs zones en phase de réaction d'oxydation catalytique, au moins une zone en phase de régénération et au moins une zone en phase de refroidissement.

Le gaz utilisé pour la régénération du catalyseur d'oxydation circule de préférence en circuit fermé à partir d'une zone de chauffage, en passant successivement par la zone catalytique en cours de régénération et une zone de refroidissement, dans laquelle la majeure partie du soufre présent dans ledit gaz est séparée par condensation, pour revenir à la zone de chauffage. Bien entendu, le gaz de régénération peut également circuler en circuit ouvert.

Le gaz utilisé pour le refroidissement du catalyseur d'oxydation régénéré est du même type que celui employé pour la régénération du catalyseur chargé de soufre. Les circuits de gaz de régénération et de gaz de refroidissement peuvent être indépendants l'un de l'autre. Toutefois, selon un mode de réalisation, le circuit de gaz de régénération, défini plus haut, peut également comporter une dérivation reliant la sortie de sa zone de refroidissement à l'entrée de la zone en cours de régénération en bipassant sa zone de chauffage, ce qui permet de court-circuiter ladite zone de chauffage et ainsi d'utiliser le gaz de régénération comme gaz de refroidissement.

Le gaz que l'on traite selon l'invention renferme H₂S comme seul composé soufré en concentration comprise entre 0,01 % et 5 % et tout spécialement entre 0,1 % et 3 % en volume. Ledit gaz renfermant H₂S peut avoir des origines diverses. En particulier, un tel gaz peut être un gaz naturel à faible teneur en H₂S ou encore un gaz provenant de la gazéification du charbon ou des huiles lourdes, voir même un gaz résultant de l'hydrogénation d'un gaz résiduaire, par exemple un gaz résiduaire d'usine à soufre, renfermant des composés soufrés tels que SO₂, mercaptans, COS ou CS₂ et/ou soufre vapeur et/ou vésiculaire.

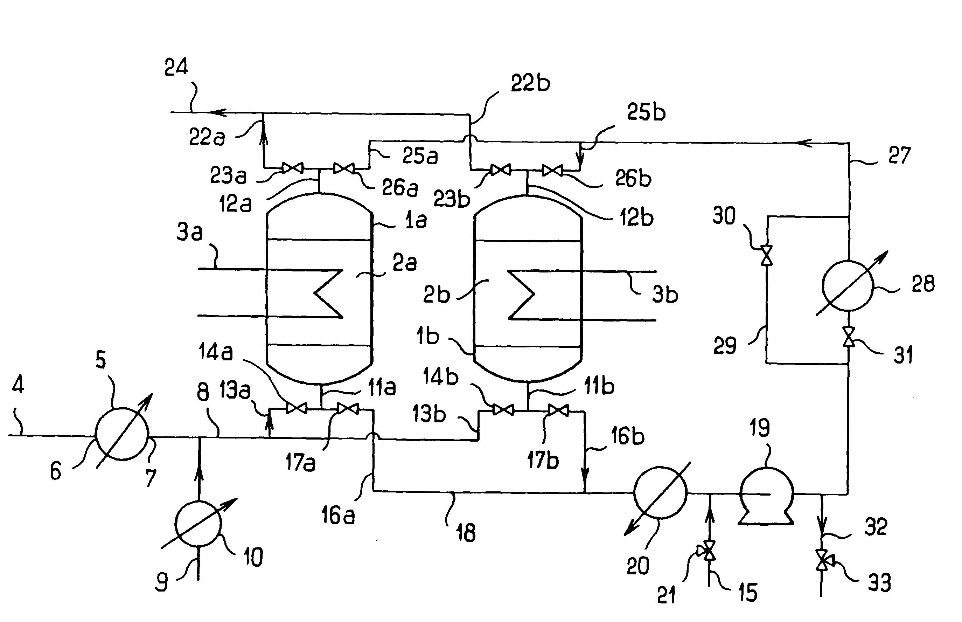

L'invention sera mieux comprise à la lecture de la description donnée ci-après de l'une de ses formes de réalisation utilisant le dispositif représenté schématiquement sur la figure du dessin annexé.

Ce dispositif comporte deux réacteurs d'oxydation catalytique 1a et 1b, qui sont montés en parallèle et renferment chacun un lit, respectivement 2a et 2b, d'un catalyseur d'oxydation de l'H₂S en soufre. Chacun des réacteurs catalytiques 1a et 1b est équipé d'un système de maintien du lit catalytique en température, ledit système pouvant être de tout type connu comme indiqué précédemment et consistant, dans le cas présent, en un serpentin, respectivement 3a et 3b, qui est disposé au sein du lit catalytique présent dans le réacteur concerné et qui est parcouru par un fluide ayant une température appropriée pour obtenir l'effet recherché, à savoir refroidissement ou chauffage. Un conduit 4 d'amenée du gaz à traiter renfermant H₂S est connecté à l'entrée 6 d'un échangeur indirect de chaleur 5.

Les réacteurs d'oxydation catalytique 1a et 1b sont munis d'un premier conduit, respectivement 11a et 11b, et d'un second conduit, respectivement 12a et 12b, situés de part et d'autre du lit catalytique présent dans chacun desdits réacteurs. Le conduit 11a du réacteur la est relié d'une part, par un conduit 13a muni d'une vanne 14a, à un conduit 8 monté à la sortie 7 de l'échangeur de chaleur 5 et d'autre part, par un conduit 16a muni d'une vanne 17a, à un conduit 18 connecté lui-même à l'orifice d'aspiration d'une soufflante 19 et sur lequel est monté un condenseur à soufre 20. De même, le conduit 11b du réacteur 1b est connecté d'une part, par un conduit 13b muni d'une vanne 14b, au conduit 8, et d'autre part, par un conduit 16b pourvu d'une vanne 17b, au conduit 18 en un point de ce dernier situé entre le conduit 16a et le condenseur à soufre 20. En amont de sa connexion avec le conduit 13a, le conduit 8 porte en dérivation une tubulure 9 d'addition d'un gaz renfermant de l'oxygène libre, ladite tubulure étant équipée d'un échangeur indirect de chaleur 10.

Le conduit 12a du réacteur 1a est relié d'une part, par un conduit 22a muni d'une vanne 23a, à un conduit 24 d'évacuation du gaz résiduaire épuré vers un réacteur d'incinération non représenté et de là à l'atmosphère et d'autre part, par un conduit 25a muni d'une vanne 26a, à un conduit 27 prolongeant l'orifice de refoulement de la soufflante 19. Le conduit 27 porte un réchauffeur 28 et une dérivation 29, qui est munie d'une vanne 30 et court-circuite le réchauffeur, et il comporte également une vanne 31 située entre le réchauffeur et la partie de la dérivation 29 en amont de ce dernier. De même le conduit 12b du réacteur 1b est connecté, par un conduit 22b muni d'une vanne 23b, au conduit 24 d'évacuation du gaz résiduaire épuré et d'autre part, par un conduit 25b muni d'une vanne 26b, au conduit 27, en un point de ce dernier situé entre la dérivation 29 et le conduit 25a. Un conduit 15 muni d'une vanne 21 à débit ajustable est monté en dérivation sur le conduit 18, entre le condenseur à soufre 20 et la soufflante 19, et constitue un conduit d'amenée d'un gaz d'appoint, tandis qu'un conduit 32 muni d'une vanne 33 à débit ajustable est monté en dérivation sur le conduit 27 entre la soufflante 19 et la jonction de la dérivation 29 avec le conduit 27 en amont de la vanne 31 et constitue un conduit de purge.

Le déroulement du procédé dans ce dispositif peut être schématisé comme suit :

On suppose que le réacteur la est en phase d'oxydation catalytique, tandis que le réacteur 1b est en phase de régénération, les vannes 14a, 17b, 23a, 26b et 31 étant ouvertes, tandis que les vannes 14b, 17a, 23b, 26a et 30 sont fermées.

Le gaz à traiter renfermant H₂S, arrivant par le conduit 4, passe dans l'échangeur de chaleur 5, dans lequel il est porté à une température appropriée pour la mise en oeuvre subséquente de l'oxydation de l'H₂S, après quoi ledit gaz est amené, par le conduit 8, au réacteur d'oxydation la par le conduit 13a, à travers la vanne 14a, et le conduit lla, après avoir reçu par le conduit 9 une quantité contrôlée d'un courant de gaz renfermant de l'oxygène libre, notamment air, pour la réalisation de l'oxydation de l'H₂S en soufre, ledit courant étant préchauffé à la température appropriée par passage dans l'échangeur indirect de chaleur 10.

Dans le réacteur 1a, qui tout comme le réacteur 1b contient un catalyseur d'oxydation de l'H₂S en soufre et par exemple un catalyseur tel que décrit plus haut, l'H₂S est oxydé sélectivement en soufre par l'oxygène au contact du catalyseur d'oxydation selon la réaction H₂S+¹/₂ O₂→S+H₂O.

Aux températures, maintenues entre 60°C et 180°C, plus particulièrement dans l'intervalle 80°C à 140°C et avantageusement dans l'intervalle 90°C à 120°C, qui sont utilisées pour la mise en oeuvre de l'oxydation, le soufre formé par l'oxydation de l'H₂S se dépose sur ledit catalyseur. Par le conduit 12a du réacteur, sort un gaz résiduaire épuré à teneur extrêmement réduite en H₂S résiduel, qui est dirigé par le conduit 22a, à travers la vanne 23a, dans le conduit 24 d'évacuation acheminant ledit gaz résiduaire épuré vers un réacteur d'incinération thermique ou catalytique non représenté.

Un courant de gaz non oxydant de balayage est envoyé par la soufflante 19 dans le conduit 27 à travers la vanne 31 et le réchauffeur 28, dans lequel ce courant gazeux est réchauffé à la température appropriée pour la régénération. Le courant de gaz réchauffé, circulant dans le conduit 27, est introduit dans le réacteur 1b par le conduit 25b, à travers la vanne 26b et le conduit 12b, et balaie le catalyseur d'oxydation chargé de soufre contenu dans ledit réacteur. Le courant de gaz de balayage, entraînant le soufre vaporisé, sort du réacteur 1b par le conduit 11b et s'écoule par le conduit 16b, à travers la vanne 17b, et le conduit 18 jusqu'au condenseur à soufre 20, dans lequel la majeure partie du soufre se sépare par condensation. A la sortie du condenseur 20, le courant de gaz de balayage est repris par la soufflante 19 pour être refoulé dans le conduit 27, comme indiqué plus haut.

Après une durée suffisante de balayage du catalyseur contenu dans le réacteur 1b par le gaz de balayage passant dans le réchauffeur 28 pour éliminer complètement le soufre déposé sur le catalyseur, on ouvre la vanne 30 et ferme la vanne 31 de manière à court-circuiter le réchauffeur 28 et à abaisser la température du gaz de balayage, et l'on poursuit le balayage pendant une durée appropriée en faisant circuler en même temps, si besoin est, un fluide à température appropriée dans le système 3b, pour refroidir le catalyseur régénéré contenu dans le réacteur 1b.

Lorsque ledit catalyseur a été refroidi à une température convenable, comprise entre 60°C et 180°C, permettant la mise en contact du catalyseur avec le courant passant dans le conduit 8 en aval de la tubulure 9, on permute les rôles joués par les réacteurs 1a et 1b, c'est-à-dire qu'on amène le réacteur 1b en phase de réaction d'oxydation et le réacteur 1a en phase de régénération/refroidissement en fermant les vannes 14a, 17b, 23a, 26b et 30 et en ouvrant les vannes 14b, 17a, 23b, 26a et 31, puis au stade de refroidissement en fermant la vanne 31 et en ouvrant la vanne 30. Pendant la période transitoire de permutation du rôle des réacteurs d'oxydation catalytique 1a et 1b, on amène le gaz de balayage à circuler dans un conduit non représenté bipassant ces réacteurs.

Pour compléter la description précédente, on donne, ci-après, à titre non limitatif, un exemple de mise en oeuvre du procédé selon l'invention.

### EXEMPLE:

En faisant appel à un dispositif analogue à celui schématisé sur la figure du dessin annexé et fonctionnant comme décrit précédemment, on traitait un gaz acide pauvre en H₂S, ledit gaz étant constitué, en volume, de 95,5 % de CO₂, 4 % d'H₂O et 0,5 % d'H₂S.

Le gaz à traiter, arrivant par le conduit 4 avec un débit de 2241 Nm³/heure et une température d'environ 30°C, était porté à 80°C après passage dans l'échangeur de chaleur 5, puis était additionné, par la tubulure 9, de 89,6 Nm³/heure d'air porté à 80°C dans l'échangeur de chaleur 10 et le mélange obtenu pénétrait dans le réacteur la en phase d'oxydation avec une température sensiblement égale à 80°C.

Le catalyseur, utilisé dans les réacteurs d'oxydation 1a et 1b, consistait en une alumine au nickel renfermant en poids 4% de nickel, ledit catalyseur étant obtenu par imprégnation d'une alumine activée à l'aide de la quantité appropriée d'acétate de nickel en solution aqueuse, puis séchage à 100°C de l'alumine imprégnée et enfin calcination du produit séché à 300°C pendant 3 heures. Ce catalyseur présentait un volume poreux, déterminé par la méthode de pénétration au mercure, égal à 410 cm³ par litre de catalyseur.

Le temps de contact du mélange gazeux, passant dans le réacteur 1a d'oxydation, avec la couche de catalyseur d'oxydation, était égal à 10 secondes. Le taux de conversion de l'H₂S en soufre, dans le réacteur d'oxydation, était égal à 98%. A la sortie du réacteur 1a, on évacuait un courant gazeux ayant une température d'environ 106°C et renfermant moins de 100 vpm d'H₂S, ledit courant gazeux étant acheminé vers un incinérateur avant son rejet à l'atmosphère.

Le gaz de balayage, injecté dans le réacteur 1b, aux fins de régénération du catalyseur d'oxydation chargé de soufre, consistait en azote et était délivré par la soufflante 19 avec un débit de 12000 Nm³/h. Ledit gaz de balayage était porté, par le réchauffeur 28, à une température comprise entre 300 et 350°C avant d'être introduit dans le réacteur 1b en phase de régénération. Lors de la phase de refroidissement du catalyseur régénéré, le réchauffeur 28 était bipassé et après que la température du gaz de balayage ait été abaissée à environ 125°C, un fluide à température de 80°C était amené à circuler dans le serpentin 36b en poursuivant le balayage.

Les réacteurs 1a et 1b opéraient alternativement pendant 30 heures en phase d'épuration, c'est-à-dire en phase de réaction, et pendant 30 heures, dont 10 heures de refroidissement, en phase de régénération/refroidissement.

## Revendications

1. Procédé d'élimination de l'H₂S contenu dans un gaz en concentration inférieure à 5 % en volume avec récupération de cet H₂S sous la forme de soufre, dans lequel on fait passer le gaz à traiter renfermant H₂S avec un gaz renfermant de l'oxygène libre, en quantité propre à fournir un rapport molaire O₂:H₂S allant de 0,5 à 3, au contact d'un catalyseur d'oxydation sélective de l'H₂S en soufre consistant en une phase active, constituée d'un ou plusieurs oxydes et/ou sels de métaux de transition, déposée sur un support en un matériau réfractaire, et l'on réalise la mise en contact du gaz à traiter et du gaz renfermant l'oxygène libre avec ledit catalyseur en opérant à des températures, qui sont maintenues, pendant toute la durée de ladite mise en contact à des valeurs choisies entre 60°C et 180°C pour oxyder substantiellement quantitativement en soufre l'H₂S présent dans ledit gaz à traiter et déposer le soufre formé sur le catalyseur et obtenir un courant gazeux pratiquement exempt d'H₂S, ledit procédé se caractérisant en ce que la phase active du catalyseur d'oxydation dérive d'au moins l'un des métaux nickel, argent et tungstène.

2. Procédé selon la revendication 1, caractérisé en ce que la phase active du catalyseur d'oxydation dérive du nickel.

3. Procédé selon la revendication 1 ou 2, caractérisé en ce que le support du catalyseur d'oxydation est choisi parmi bauxite, alumine, oxyde de titane, oxyde de zirconium, zéolithes, mélanges silice/alumine, mélanges silice/oxyde de titane, silice et charbon actif.

4. Procédé selon l'une des revendications 1 à 3, caractérisé en ce que le catalyseur d'oxydation présente un volume poreux, déterminé par la méthode de pénétration au mercure, représentant 150 cm³ à 600 cm³ par litre de catalyseur.

5. Procédé selon l'une des revendications 1 à 4, caractérisé en ce que le temps de contact du milieu réactionnel gazeux, formé du gaz à traiter renfermant H₂S et du gaz renfermant de l'oxygène libre, avec le catalyseur d'oxydation, a une valeur allant de 0,5 seconde à 20 secondes et de préférence de 1 seconde à 15 secondes, dans les conditions normales de pression et de température.

6. Procédé selon l'une des revendications 1 à 5, caractérisé en ce que la phase active du catalyseur d'oxydation, comptée en poids de métal, représente 0,1 à 15% et de préférence 0,2 à 7% du poids dudit catalyseur.

7. Procédé selon l'une des revendications 1 à 6, caractérisé en ce que le catalyseur d'oxydation chargé de soufre est soumis périodiquement à une régénération, en balayant ledit catalyseur, directement à l'issue de l'oxydation, à l'aide d'un gaz non oxydant, à des températures comprises entre 200°C et 500°C et de préférence entre 250°C et 450°C, pour vaporiser le soufre retenu sur le catalyseur, puis le catalyseur régénéré est refroidi juqu'à une température comprise entre 60°C et 180°C pour une nouvelle mise en oeuvre de la réaction d'oxydation, ce refroidissement étant réalisé au moyen d'un gaz inerte.

8. Procédé selon la revendication 7, caractérisé en ce que le gaz de refroidissement est chargé de vapeur d'eau au moins pendant la phase finale du refroidissement du catalyseur régénéré.

9. Procédé selon l'une des revendications 1 à 8, caractérisé en ce que la mise en contact du gaz à traiter renfermant H₂S et du gaz renfermant de l'oxygène libre avec le catalyseur d'oxydation est réalisée à des températures maintenues dans l'intervalle 80°C à 140°C et de préférence dans l'intervalle 90°C à 120°C.

10. Procédé selon l'une des revendications 1 à 9, caractérisé en ce que le gaz à traiter renferme H₂S comme seul composé soufré en concentration comprise entre 0,01 % et 5 % et de préférence entre 0,1 % et 3 % en volume.

11. Procédé selon l'une des revendications 1 à 10, caractérisé en ce que le maintien de la température de mise en contact du gaz à traiter renfermant H₂S et du gaz renfermant de l'oxygène libre avec le catalyseur d'oxydation est réalisé en utilisant un fluide circulant en échange indirect de chaleur avec ledit catalyseur.

12. Procédé selon l'une des revendications 1 à 10, caractérisé en ce que l'oxydation catalytique de l'H₂S est mise en oeuvre dans un réacteur à plusieurs étages de catalyseur avec refroidissement du milieu réactionnel entre les étages successifs par échange indirect de chaleur avec un fluide froid, l'échange de chaleur ayant lieu à l'intérieur ou à l'extérieur du réacteur d'oxydation.

13. Procédé selon l'une des revendications 1 à 12, caractérisé en ce que le gaz à traiter renfermant H₂S et le gaz renfermant de l'oxygène libre sont amenés au contact du catalyseur d'oxydation de telle sorte que le rapport molaire O₂:H₂S soit de 0,5 à 1,5.

## Patentansprüche

1. Verfahren zur Abtrennung des in einem Gas in einer Konzentration von unter 5 Vol.-% enthaltenen H₂S unter Gewinnung desselben in Form von Schwefel wobei man das zu behandelnde, H₂S enthaltende Gas zusammen mit einem freien Sauerstoff enthaltenden Gas, in einer für die Erzielung eines Molverhältnisses von O₂ : H₂S = 0,5 bis 3 ausgewählten Menge, mit einem Katalysator für die selektive Oxidation von H₂S zu Schwefel, der aus einer aus einem oder mehreren Oxiden und/oder Salzen von Übergangsmetallen zusammengesetzten und auf einem Träger aus einem Feuerfeststoff abgeschiedenen aktiven Phase besteht, in Berührung bringt und man die Kontaktierung des zu behandelnden Gases und des freien Sauerstoff enthaltenden Gases mit dem Katalysator bei Temperaturen durchführt, die während der gesamten Kontaktierungsdauer bei ausgewählten Werten zwischen 60 und 180°C gehalten werden, um den im zu behandelnden Gas enthaltenen Schwefelwasserstoff im wesentlichen quantitativ zu Schwefel zu oxidieren, den gebildeten Schwefel auf dem Katalysator abzuscheiden und einen praktisch H₂S-freien Gasstrom zu erhalten, wobei das Verfahren dadurch gekennzeichnet ist, daß die aktive Phase des Oxidationskatalysators wenigstens von einem der Metalle Nickel, Silber und Wolfram stammt.

2. Verfahren nach Anspruch 1, dadurch gekennzeichnet, daß die active Phase des Oxidationskatalysators von Nickel abgeleitet ist.

3. Verfahren nach Anspruch 1 oder 2, dadurch **gekennzeichnet,** daß der Träger des Oxidationskatalysators ausgewählt wird unter Bauxit, Tonerde, Titanoxid, Zirkonoxid, Zeolithen, Gemischen aus Kiesel- und Tonerde, Gemischen aus Kieselerde und Titanoxid sowie Kieselerde und Aktivkohle.

4. Verfahren nach einem der Ansprüche 1 bis 3, dadurch **gekennzeichnet,** daß der Oxidationskatalysator ein Porenvolumen, ermittelt nach dem Verfahren des Quecksilbereindringvermögens, von 150 bis 600 cm³ pro Liter Katalysator aufweist.

5. Verfahren nach einem der Ansprüche 1 bis 4, dadurch **gekennzeichnet,** daß die Dauer der Kontaktierung des aus dem H₂S enthaltenden, zu behandelnden Gas und dem freien Sauerstoff enthaltenden Gas gebildeten Reaktionsmediums mit dem Oxidationskatalysator unter normalen Druck- und Temperaturbedingungen einen Wert zwischen 0,5 Sekunden und 20 Sekunden und vorzugsweise zwischen 1 Sekunde und 15 Sekunden aufweist.

6. Verfahren nach einem der Ansprüche 1 bis 5, dadurch **gekennzeichnet,** daß die aktive Phase des Oxidationskatalysators, bezogen auf das Gewicht des Metalls, 0,5 bis 15 Gew.-% und vorzugsweise 0,2 bis 7 Gew.-% des Katalysators ausmacht.

7. Verfahren nach einem der Ansprüche 1 bis 6, dadurch **gekennzeichnet,** daß der mit Schwefel beladene Oxidationskatalysator von Zeit zu Zeit regeneriert wird, indem man den Katalysator unmittelbar nach der Oxidation mit einem nichtoxidierenden Gas bei Temperaturen zwischen 200 und 500°C und insbesondere zwischen 250 und 400°C spült, um den auf dem Katalysator zurückgehaltenen Schwefel zu verdampfen, wonach der regenerierte Katalysator bis auf eine Temperatur zwischen 60 und 180°C für eine erneute Verwendung für die Oxidationsreaktion abgekühlt wird, wobei diese Abkühlung mit Hilfe eines Inertgases durchgeführt wird.

8. Verfahren nach Anspruch 7, dadurch **gekennzeichnet,** daß das Gas für die Abkühlung wenigstens während der Endphase der Abkühlung des regenerierten Katalysators mit Wasserdampf beladen wird.

9. Verfahren nach einem der Ansprüche 1 bis 8, dadurch **gekennzeichnet,** daß die Kontaktierung des H₂S enthaltenden, zu behandelnden Gases und des freien Sauerstoff enthaltenden Gases mit dem Oxidationskatalysator bei Temperaturen durchgeführt wird, die in einem Bereich von 80°C bis 140°C und vorzugsweise von 90°C bis 120°C gehalten werden.

10. Verfahren nach einem der Ansprüche 1 bis 9, dadurch **gekennzeichnet,** daß das zu behandelnde Gas H₂S als einzige Schwefelverbindung in einer Konzentration zwischen 0,01 und 5 Vol.-% und vorzugsweise zwischen 0,1 und 3 Vol.-% enthält.

11. Verfahren nach einem der Ansprüche 1 bis 10, dadurch **gekennzeichnet**, daß die Aufrechterhaltung der Temperatur für die Kontaktierung des H₂S enthaltenden, zu behandelnden Gases und des freien Sauerstoff enthaltenden Gases mit dem Oxidationskatalysator unter Verwendung eines im indirekten Wärmeaustausch mit dem Katalysator umlaufenden Fluids erfolgt.

12. Verfahren nach einem der Ansprüche 1 bis 10, dadurch **gekennzeichnet,** daß die katalytische Oxidation des H₂S in einem mehrere Katalysatorstufen umfassenden Reaktor unter Abkühlung des Reaktionsmediums zwischen den aufeinanderfolgenden Stufen durch indirekten Wärmeaustausch mit einem Kühlmittel durchgeführt wird, wobei es innerhalb oder außerhalb des Oxidationsreaktors zum Wärmeaustausch kommt.

13. Verfahren nach einem der Ansprüche 1 bis 12, dadurch **gekennzeichnet,** daß das H₂S enthaltende, zu behandelnde Gas und das freien Sauerstoff enthaltende Gas der Kontaktierung mit dem Oxidationskatalysator so zugeführt werden, daß das Molverhältnis O₂:H₂S 0,5 bis 1,5 beträgt.

## Claims

1. Process for the removal of H₂S contained in a gas in a concentration of less than 5% by volume and recovery of this H₂S in the form of sulphur, in which the gas to be treated, containing H₂S, is brought, together with a gas containing free oxygen in a quantity which is suitable for producing an O₂:H₂S molar ratio of from 0.5 to 3, into contact with a catalyst for selective oxidation of H₂S into sulphur, consisting of an active phase, formed of one or more oxides and/or salts of transition metals, deposited on a support of a refractory material, and the gas to be treated and the gas containing free oxygen are brought into contact with said catalyst in operating at temperatures which are maintained for the whole of the duration of said bringing into contact at values selected between 60°C and 180°C to oxidise, substantially quantitatively, the H₂S present in said gas to be treated into sulphur, and to deposit the sulphur which has been formed onto the catalyst and to obtain a gaseous current which is practically free from H₂S, said process being characterised in that the active phase of the oxidation catalyst originates from at least one of the metals nickel, silver and tungsten.

2. Process according to Claim 1, characterised in that the active phase of the oxidation catalyst originates from nickel.

3. Process according to Claim 1 or Claim 2, characterised in that the support of the oxidation catalyst is selected from among bauxite, alumina, titanium oxide, zirconium oxide, zeolites, silica/alumina mixtures, silica/titanium oxide mixtures, silica and active carbon.

4. Process according to one of Claims 1 to 3, characterised in that the oxidation catalyst has a porous volume, determined by the mercury penetration method, of 150 cm³ to 600 cm³ per litre of catalyst.

5. Process according to one of Claims 1 to 4, characterised in that the time for which the gaseous reactive medium, formed of gas to be treated containing H₂S and of gas containing free oxygen, is in contact with the oxidation catalyst is from 0.5 seconds to 20 seconds, and preferably from 1 second to 15 seconds, in normal pressure and temperature conditions.

6. Process according to one of Claims 1 to 5, characterised in that the active phase of the oxidation catalyst, counted by weight of metal, is 0.1 to 15% and preferably 0.2 to 7% of the weight of said catalyst.

7. Process according to one of Claims 1 to 6, characterised in that the oxidation catalyst, charged with sulphur, is periodically subjected to a regeneration, by sweeping said catalyst, directly following the oxidation, by means of a non-oxidant gas, at temperatures of between 200°C and 500°C and preferably of between 250°C and 450°C, to vapourise the sulphur retained on the catalyst, and the regenerated catalyst is then cooled to a temperature of between 60°C and 180°C to perform the oxidation reaction anew, this cooling being produced by means of an inert gas.

8. Process according to Claim 7, characterised in that the cooling gas is charged with water vapour, at least during the final phase of cooling of the regenerated catalyst.

9. Process according to one of Claims 1 to 8, characterised in that the gas to be treated containing H₂S and the gas containing free oxygen are brought into contact with the oxidation catalyst at temperatures maintained within the range from 80°C to 140°C and preferably in the range from 90°C to 120°C.

10. Process according to one of Claims 1 to 9, characterised in that the gas to be treated contains H₂S as the only sulphur-containing compound in a concentration of between 0.01% and 5% and preferably between 0.1% and 3% by volume.

11. Process according to one of Claims 1 to 10, characterised in that the temperature at which the gas to be treated, containing H₂S, and the gas containing free oxygen are brought into contact with the oxidation catalyst, is maintained, using a fluid circulating in indirect heat exchange with said catalyst.

12. Process according to one of Claims 1 to 10, characterised in that the catalytic oxidation of the H₂S is performed in a reactor with several stages of the catalyst with cooling of the reactive mixture between the successive stages by indirect heat exchange with a cold fluid, the heat exchange being performed at the inside or at the outside of the oxidation reactor.

13. Process according to one of Claims 1 to 12, characterised in that the gas to be treated, containing H₂S, and the gas containing free oxygen, are brought into contact with the oxidation catalyst in such a manner that the O₂:H₂S molar ratio is from 0.5 to 1.5.
